Europäisches Patentamt

European Patent Office

Office européen des brevets

(19)

(11) **EP 1 281 226 B1**

(12) ## EUROPEAN PATENT SPECIFICATION

(45) Date of publication and mention
of the grant of the patent:
**17.12.2003 Bulletin 2003/51**

(21) Application number: **00972850.2**

(22) Date of filing: **23.10.2000**

(51) Int Cl.⁷: **H02H 3/20**, H02H 3/247

(86) International application number:
**PCT/EP00/10435**

(87) International publication number:
**WO 01/086776 (15.11.2001 Gazette 2001/46)**

(54) **UNDER- AND/OR OVERVOLTAGE RELEASE**

UNTER- UND/ODER ÜBERSPANUNGSAUSLÖSER

GENERATION DE SOUS- ET/OU SURTENSION

(84) Designated Contracting States:
**AT DE ES FR GB IT**

(30) Priority: **10.05.2000 EP 00109907**

(43) Date of publication of application:
**05.02.2003 Bulletin 2003/06**

(73) Proprietor: **SIEMENS AKTIENGESELLSCHAFT
80333 München (DE)**

(72) Inventor: **WOLF, Johann
93080 Pentling (DE)**

(56) References cited:
**US-A- 4 156 280**

## Description

The invention relates to an under- and/or overvoltage release having a release device, which outputs a release pulse for actuating a switching contact in the event of a voltage to be monitored and having a given power supply frequency deviating from a voltage threshold value.

An under- or overvoltage release causes an electrical switch, for example a power circuit-breaker, to open or close, with or without delay, if the voltage at the terminals thereof falls below or, respectively, exceeds a given value. In this case, the voltage limit value which, when undershot or exceeded, causes the release device to output a release pulse for actuating the electrical switch or generally a switching contact is usually set in a fixed manner. An undervoltage release in which the voltage limit value is set in a fixed manner by means of a zener diode connected downstream of a rectifier is disclosed e.g. in DE 2 239 654 A1 and in DE 39 12 601 A1.

Since an under- or overvoltage release is generally designed as an attachment device or attachment module for an electrical protective circuit-breaker, in particular for a line protective circuit-breaker, different release types with differing voltage limit values, the undershooting or exceeding of which is intended to give rise to a release operation, have to be provided in practice for different applications and, furthermore, on account of permissible voltage ranges prescribed by regulations. In addition to the associated disadvantage of stockkeeping on account of the required diversity of types, extremely undesirable problems often arise in particular in the course of the interaction of a plurality of under- and/or overvoltage releases in an installation.

The invention is based on the object, therefore, of specifying an under- and/or overvoltage release which is as universal as possible and, whilst avoiding the abovementioned disadvantages, can be used for different applications, in particular for different rated values or rated voltages of an electricity supply system to be switched.

This object is achieved according to the invention by means of the features of claim 1. To that end, provision is made of a comparator circuit for comparing the voltage to be monitored with the voltage threshold value, and a combination circuit which logically combines the comparator signal, which is present in the form of a state signal having a first pulse duration, with a comparison signal having a second pulse duration. In the event of the pulse duration of the state or comparator signal deviating from the pulse duration of the comparison signal, the combination circuit generates an under- or overvoltage pulse for generating the release pulse.

In an advantageous development, the voltage threshold value fed to a (second) input of the comparator circuit is a variable comparison voltage, i.e. a comparison voltage which is adjusted manually or by remote control. The voltage signal fed to the first input of the comparator circuit is expediently derived from the voltage to be monitored, by rectification and also, if appropriate, by voltage division, smoothing and amplification. Consequently, a release operation takes place if the voltage to be monitored falls below the respective comparison voltage that has been set and hence a corresponding reference or release value in the case of undervoltage monitoring and exceeds it in the case of overvoltage monitoring. For remote adjustment, the comparison voltage is fed to the second input of the comparator circuit expediently via a bus coupler.

The (second) pulse duration of the comparison signal expediently corresponds to 0.25 times the power supply frequency. Consequently, the voltage threshold value - and hence the variable comparison voltage - intersects a sinusoidal voltage to be monitored at 70.7% of its peak value for the case where the (first) pulse duration of the state signal of the comparator circuit and the pulse duration of the comparison signal of the combination circuit are identical. In value terms, the voltage threshold value or the comparison voltage then corresponds to the root-mean-square value of the AC voltage to be monitored and, at the same time, to the DC voltage value. In this case, the second pulse duration is expediently adjustable, so that it can be adapted to the respective power supply frequency, e.g. 50 Hz or 60 Hz.

Consequently, the pulse duration of the comparison signal is shorter than half the period duration of the voltage to be monitored. If the pulse duration of the state or comparator signal is longer than the pulse duration of the comparison signal, then the combination circuit generates an overvoltage pulse by logically combining the state signal with the inverted comparison signal. If the pulse duration of the state signal is shorter than the pulse duration of the comparison signal, then the combination circuit supplies an undervoltage pulse from a logic combination of the inverted state signal with the comparison signal. In this case, the terms undervoltage and overvoltage relate to a standard voltage value which is defined by the identity of the pulse durations of both signals and is fixed by the pulse duration of the comparison signal.

The comparison signal is expediently generated by means of a first monostable multivibrator assigned to the combination circuit and having a delay time corresponding to the second pulse duration. This first monostable multivibrator expediently in the form of a one-shot is connected, on the input side, to the output of the comparator circuit and, on the output side, to a respective first input of preferably two AND gates. Connected to the respective second input thereof is once again the output of the comparator circuit and hence the state signal thereof.

If the voltage to be monitored and hence the input voltage present at the first input of the comparator circuit exceed the voltage threshold value, then the state signal of the comparator circuit changes over for example from low to high and triggers the first multivibrator with its fixed or constant (second) pulse duration. The combination of the state signal with the comparison signal then leads to the overvoltage pulse if the (first) pulse duration of the state signal is longer than the constant (second) pulse duration of the comparison signal. This is the case if the voltage to be monitored exceeds the voltage threshold value and, furthermore, the standard voltage value, in the case of which the pulse durations of the state signal and of the comparison signal are identical. In the opposite case, when although the voltage to be monitored already falls below the standard voltage value, it still exceeds the voltage threshold value, the combination circuit generates the undervoltage pulse, since the pulse duration of the state signal is then shorter than the pulse duration of the comparison signal.

If the voltage to be monitored and hence the input voltage which is derived therefrom and is present at the first input of the comparator circuit are lower than the voltage threshold value, or alternatively if a DC voltage is involved which is less than or greater than the voltage threshold value, then the state signal of the comparator circuit remains at a constant value, for example high or low. Accordingly, the first monostable multivibrator is not activated and the combination circuit does not supply any signals.

In an expedient refinement, the combination circuit is assigned a second monostable multivibrator, likewise expediently in the form of a one-shot, whose pulse duration corresponds at least to half the power supply frequency. This second multivibrator is triggered if the state signal exhibits a signal changeover. In the event of regular triggering of the second multivibrator, the latter supplies a constant output signal, e.g. high. Only in the event of a transition in the voltage to be monitored to below the voltage threshold value or when a DC voltage is present does the output signal of the second multivibrator change over e.g. to low.

Analogously to the adjustability of the (second) pulse duration and the delay time of the first monostable multivibrator, the delay time of the second monostable multivibrator and hence the (third) pulse duration are also adjustable as a function of the respective power supply frequency. To that end, by way of example, a potentiometer is provided in the case of an analog design and driving of the multivibrators, while in the case of a digital design as counter, the respective count is adjustable or predeterminable.

By means of a logic AND combination of the state signal of the comparator circuit with the inverted output signal of the second multivibrator for overvoltages and a logic AND combination both of the inverted state signal and of the inverted output signal of the second multivibrator for undervoltages, both DC voltage signals and AC voltage signals can be reliably monitored.

In order to produce a complete statement with the same voltage release, on the one hand the two undervoltage signals, which are formed from a logic AND combination of the inverted state signal with the output or comparison signal of the first multivibrator and of the inverted state signal with the inverted output signal of the second multivibrator, and on the other hand the two overvoltage signals, which are formed from a logic AND combination of the state signal with the inverted comparison signal of the first multivibrator and of the state signal with the inverted output signal of the second multivibrator, are preferably in each case combined by means of an OR gate. The output signals thereof are fed, preferably again via a digital changeover switch, to a bistable multivibrator in order to retain the over- or undervoltage state that has been identified.

The corresponding report of the bistable multivibrator, which is expediently designed as a flip-flop, is preserved until the latter is reset via an acknowledgement key. On the output side, the bistable multivibrator is connected to the release device in the form, for example, of a release relay or an operating current release for actuating a switching contact or a switch.

The particular advantages obtained with the invention are that a universal under- and/or overvoltage release is provided by a comparator circuit for comparing a voltage to be monitored with a preferably adjustable release or voltage threshold value and a combination circuit for logically combining the comparator or state signal with a comparison signal by means of a comparison of their pulse durations. In this case, a corresponding detection and processing principle is used for the entire range from an undervoltage through to an overvoltage with respect to a preferably adjustable voltage threshold value.

Furthermore, the adjustability of the voltage threshold value makes it possible to adapt the under- and/or overvoltage release to any desired release situations and also for a plurality of such voltage releases to be coordinated with one another. In this case, the voltage threshold value can be adjusted either on site manually on the device itself or via a communications interface, e.g. via a bus coupling to the so-called European Installation Bus (EIB). Via this communications interface, the respective voltage threshold value can, moreover, be adapted as required and also read out.

Furthermore, it is possible to switch between the two functions of the under- and overvoltage release via the communications interface or else manually on the device. Furthermore, individual processing steps or interim results, for example a continuous overvoltage, a continuous undervoltage or a release state, can also be indicated e.g. by means of a light-emitting diode (LED) on the device itself or be reported via the communications interface.

The universal under- and/or overvoltage release is particularly suitable as an attachment module for a low-voltage switching device, in particular for an electrical protective circuit-breaker, e.g. for a line protective circuit-breaker.

Exemplary embodiments of the invention are explained in more detail below with reference to a drawing, in which:

FIG. 1 schematically shows an under- and overvoltage release which interacts with an individual switching contact via a release relay, with a comparator circuit for setting a release limit value and with a combination circuit for a pulse duration comparison,

FIG. 2 shows, in a signal diagram, the state and combination signals generated by the comparator circuit and by the combination circuit,

FIG. 3 shows an under- and overvoltage release in accordance with FIG. 1 with a bus coupling and with a release device which interacts with switching contacts via a latch,

FIG. 4 shows an undervoltage release in an illustration in accordance with FIG. 1.

Mutually corresponding parts are provided with the same reference symbols in all the figures.

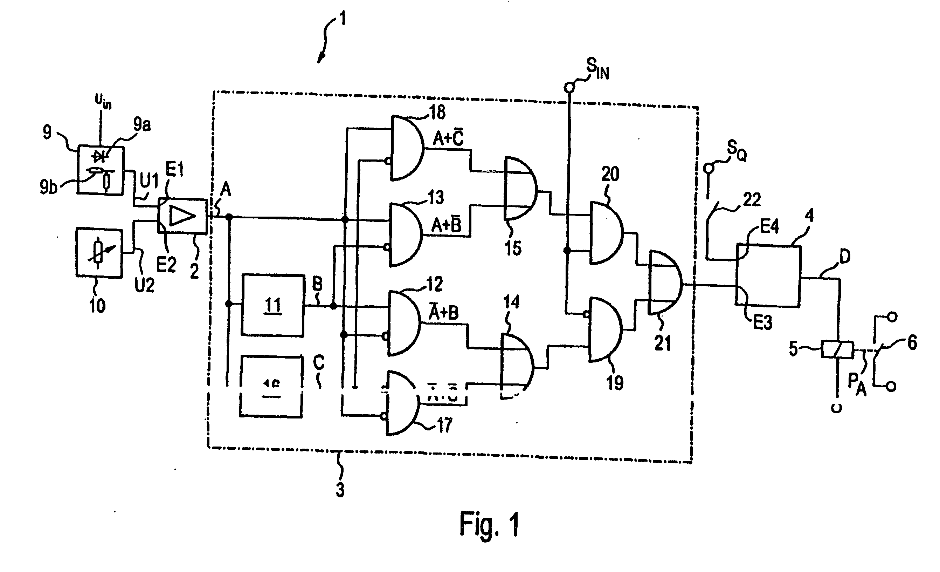

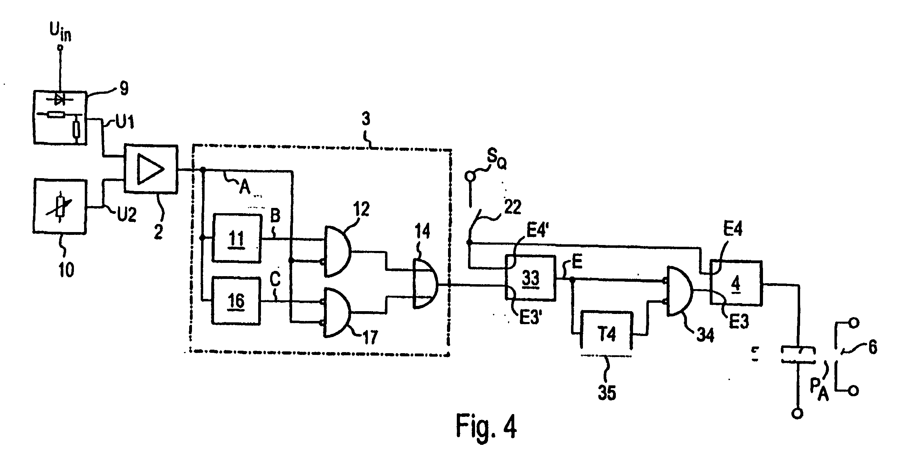

The under- and overvoltage release 1 illustrated in FIG. 1 comprises an operational amplifier in comparator circuit 2 and a combination circuit 3, which is connected downstream of the latter and, on the output side, is connected via a bistable multivibrator 4 to a release device in the form of a release relay 5. The release relay 5 is mechanically coupled to a switching contact 6. As an alternative in accordance with FIG. 4, the release device 5 may also be coupled to a latch 7 of an electrical protective circuit-breaker 8, e.g. a line protective circuit-breaker, whose switching contacts 6 are connected into the phase lines L1, L2, L3 of an electricity supply system or supply network.

A first input E1 of the comparator circuit 2 is connected to a first input stage 9, to which the voltage $U_{in}$ to be monitored is fed on the input side. The input stage 9 comprises a rectifier circuit 9a, symbolized by a diode, and a voltage divider circuit 9b, symbolized by non-reactive resistors. The second input E2 of the comparator circuit 2 is connected to a second input stage 10 having a manually variable voltage divider in the form, for example, of a potentiometer, which can be actuated by means of an operating element in a manner not specifically illustrated, a coding switch or a dip switch.

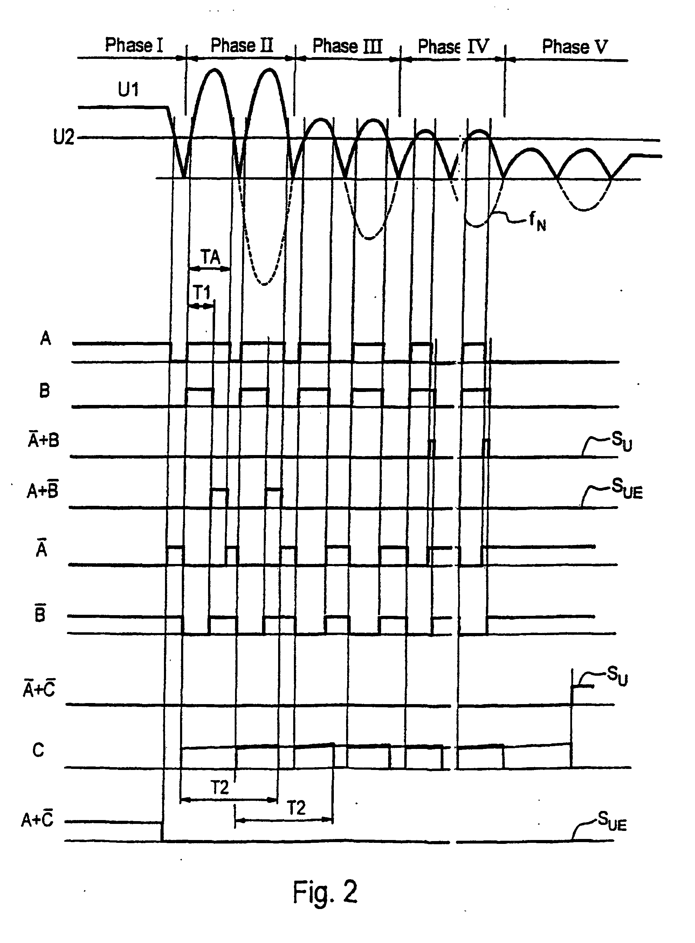

In the input stage 9, the voltage $U_{in}$ to be monitored is rectified by means of the rectifier circuit 9a. The rectified voltage $U_{in}$, which may have been reduced by means of the voltage divider circuit 9b, is fed as input voltage U1 to the first input E1 of the comparator circuit 2. A reference or comparison voltage U2, which is set as required by means of the second input stage 10 by manual actuation, is fed to the second input E2 of the comparator circuit 2. The input voltage U1 and the respective comparison voltage U2 that has been set are illustrated in the top part of the signal diagram in accordance with FIG. 2.

In this case, the setting range for the comparison voltage U2 expediently covers all or at least a multiplicity of release limit values that are to be represented by such an under- or overvoltage release 1. The voltage supply - provided for generating the reference or comparison voltage U2 - to the second input stage 10 is in this case effected, in a manner not specifically illustrated, preferably from the supply voltage of an electronic unit that is usually provided in such a voltage release 1.

On the output side, the comparator circuit 2 supplies a comparator or state signal A having a first pulse duration TA, which is entered in the signal diagram according to FIG. 2. The state signal A is fed to the input of a first monostable multivibrator in the form of a one-shot 11 having a set delay time. The output signal B - illustrated in the diagram in accordance with FIG. 2 - of the first multivibrator 11 having a second pulse duration T1 and the state signal A of the comparator circuit 2 having the first pulse duration TA are fed, directly or inverted, to two AND gates 12, 13 of the combination circuit 3, which, on the output side, supply the combination signals $\bar{A}+B$ and $A+\bar{B}$, respectively, illustrated in the diagram in accordance with FIG. 2. These combination signals are fed to a first OR gate 14 and a second OR gate 15, respectively, of the combination circuit 3.

The pulse duration T1 of the comparison signal B is expediently set to a quarter of the power supply frequency $f_N$, so that T1 = $1/4 \cdot f_N$. Consequently, given a power supply frequency of $f_N$ = 50 Hz, the pulse duration is T1 = 5 ms. Thus, the voltage threshold value or the comparison voltage U2 intersects a sinusoidal voltage U1 to be monitored at 70.7% of its peak value, if TA = T1. In value terms, the comparison voltage U2 then corresponds to the root-mean-square value of the AC voltage U1 to be monitored and, at the same time, to the DC voltage value. This is illustrated using a voltage profile - designated as phase III - of the voltage U1 to be monitored in the diagram in accordance with FIG. 2.

The state signal A is additionally fed to the input of a second monostable multivibrator in the form of a one-shot 16 having a likewise predetermined delay time. The output signal C - illustrated in the diagram in accordance with FIG. 2 - of the second multivibrator 16 having a third pulse duration T2 and the state signal A of the comparator circuit 2 are fed, directly and inverted, to two further AND gates 17, 18 of the combination circuit 3, which, on the output side, supply the combination signals $\bar{A} + \bar{C}$ and $A+\bar{C}$, respectively, illustrated in the diagram according to FIG. 2. These combination signals are fed to the first OR gate 14 and the second OR gate 15, respectively, of the combination circuit 3.

The pulse duration T2 of the second one-shot 16 is expediently longer than half the period duration of the voltage $U_{IN}$ to be monitored and hence of the input voltage U1 derived from the latter. The pulse duration T2 thus corresponds to at least half the power supply frequency $F_N$ (T2 > $1/2 \cdot f_N$).

On the output side, the two OR gates 14 and 15 are connected to a respective input of a further AND gate 19 and 20, respectively, to whose respective further input an input signal $S_{IN}$ is fed inverted and directly, respectively. On the output side, the two AND gates 19 and 20 of the combination circuit 3 are connected to an OR gate 21, which, on the output side, is connected to a first input E3 of the bistable multivibrator 4. An acknowledgement signal $S_Q$ can be fed to a second input E4 of the bistable multivibrator 4 via an acknowledgement key or an acknowledgement switch 22. An output signal D of the bistable multivibrator 4 is or switches a voltage supply of the release device 5, which generates a release pulse $P_A$ as a function of the signal state of the output signal D, e.g. low. The AND gates 19 and 20 and the OR gate 21 form a digital changeover switch of the combination circuit 3.

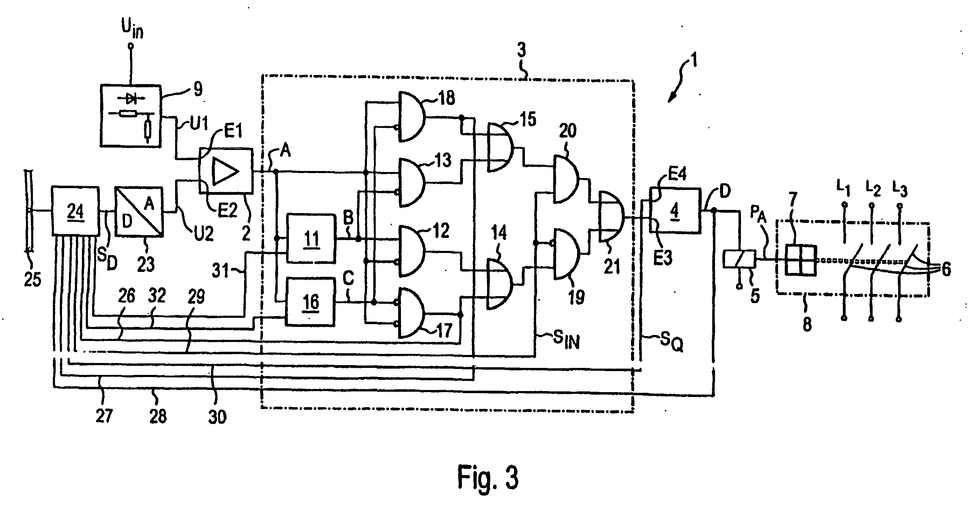

In the case of the adjustable under- and overvoltage release 1 illustrated in FIG. 3, the second input E2 of the comparator circuit 2 is connected via an analog-to-digital converter 23 to a bus coupler 24, which is connected to an installation bus 25, e.g. to a European Installation Bus (EIB). The comparison voltage U2 is advantageously set or altered by remote adjustment via the installation bus 25 and the bus coupler 24. To that end, a digital control signal $S_D$ supplied by the bus coupler 24 is converted into the analog comparison voltage U2 by means of the digital-to-analog converter 23. When a corresponding processor is integrated into the bus coupler 24, the latter can also output the comparison voltage U2 directly. Both the input voltage U1 and the comparison voltage U2 may be a continuous, analog signal or a discrete-time, digital signal.

The bus coupler 24 is fed the states of the AND gates 17 and 18 via signal lines 26 and 27, respectively, and the output state D of the bistable multivibrator 4 via a signal line 28. Via the bus coupler 24, moreover, the input or changeover signal $S_{IN}$ and the acknowledgement signal So are fed via control lines 29, 30 to the AND gates 19 and 20 and, respectively, to the input E4 of the bistable multivibrator 4. This embodiment in accordance with FIG. 3 is therefore particularly suitable for linking the adjustable under- and overvoltage release 1 into the EIB system.

Via further control lines 31 and 32 connected to the two multivibrators 11 and 16, respectively, the pulse duration T1, T2 thereof is adjustable or variable. The setting of the pulse duration T1 and/or T2 that is to be performed as a function of the respective power supply frequency $f_N$, and hence the changing or prescribing of the delay time of the multivibrators 11, 16, is effected under remote control via the bus coupler 24 in the embodiment in accordance with FIG. 3. If the multivibrators 11, 16 are of analog design in this case, the setting is expediently effected by means of a potentiometer (not illustrated) or the like. If the multivibrators are of digital design in the form of counters, their respective counts are set or prescribed - depending on the power supply frequency $f_N$, where e.g. $f_N$ = 50 Hz or $f_N$ = 60 Hz.

If, in accordance with the voltage profile designated as phase II in FIG. 2, the voltage $U_{IN}$ to be monitored and hence the input voltage U1 derived therefrom at the input E1 of the comparator circuit 2 is greater than the comparison voltage U2 fed to the second input E2 of said comparator circuit, then, in accordance with the signal profile according to FIG. 2, the comparator or state signal A changes over from low to high and triggers the two one-shots 11 and 16 with the respectively set pulse duration T1 and T2.

If the pulse duration TA of the state signal A is longer than the pulse duration T1 of the output or comparison signal B of the first one-shot 11, then the logic combination $A + \bar{B}$ of the AND gate 13 of the combination circuit 3 supplies an overvoltage pulse $S_{UE}$ (phase II). If, on the other hand, the pulse duration TA is shorter than the pulse duration T1 (phase IV), then the logic combination $\bar{A} + B$ of the AND gate 12 of the combination circuit 3 supplies an undervoltage pulse $S_U$. Said undervoltage or overvoltage relates to the standard voltage value illustrated in phase III of FIG. 2. Said standard voltage value is defined by the relationship TA = T1 and is fixed by the pulse duration T1.

The respective over- or undervoltage signal $S_{UE}$ or $S_U$ is passed via the logic gates 19 to 21 of the combination circuit 3 to the bistable multivibrator 4, whose output signal D drives the release device 5 correspondingly. Accordingly, the release device 5 outputs a corresponding release pulse $P_A$ for actuating the switching contact 6. In this case, a changeover between over- and undervoltage triggering is effected by way of the input signal $S_{IN}$. The output signal D of the bistable multivibrator 4 is preserved until, via the acknowledgement pushbutton switch 22, the acknowledgement signal $S_Q$ is present at the input E4 of the bistable multivibrator 4, with the result that the latter changes over to the previous stable state and the output signal D changes over from low to high, for example.

If the voltage $U_{IN}$ to be monitored and hence the input voltage U1 present at the input E1 of the comparator circuit 2 are smaller than the comparison voltage U2, or if DC voltages are involved which are less than or greater than the comparison voltage U2 set, then the state signal A of the comparator circuit 2 remains at a constant value, e.g. at high or low. Accordingly, the first one-shot 11 is not activated and the AND gates 12, 13 and, consequently, the logic combinations $\bar{A} + B$ and $A + \bar{B}$, respectively, do not supply any signals.

If the state signal A exhibits a signal changeover, the second one-shot 16 is triggered, with the result that the output signal C exhibits the high state in the event of regular triggering in accordance with the phases II, III and IV according to FIG. 2. Only in the event of a transition to an excessively small input voltage U1 or when DC voltages are present does the output signal C of the second one-shot 16 become low.

Both DC and AC voltage signals are monitored by the corresponding logic combinations $A + \bar{C}$ at the output of the AND gate 18 for excessively high DC voltages and the logic combination $\bar{A}+\bar{C}$ at the output of the AND gate 17 for undervoltages, i.e. for excessively small DC voltages or excessively small AC voltages.

For the complete statement with regard to an overvoltage or an undervoltage, the two combination signals $\bar{A}+B$ and $\bar{A}+\bar{C}$ for undervoltage signals $S_U$, and the two combination signals $A+\bar{B}$ and $A+\bar{C}$ for overvoltage signals $S_{UE}$, are logically combined by means of the OR gates 14 and 15, respectively, and fed to the input E3 of the bistable multivibrator 4 via the elements 19 to 21, which are connected as a digital converter. Consequently, once an over- or undervoltage state has been identified, it is retained. The corresponding report can only be reset by the actuation of the acknowledgement key 22.

FIG. 4 shows an embodiment of the combination circuit 3 for a purely undervoltage release 1. To that end, it comprises merely the two monostable multivibrators 11 and 16 and the two AND gates 12 and 17 and the OR gate 14. Analogously, a purely overvoltage release 1 comprises once again the two one-shots 11 and 16 and, in a manner not specifically illustrated, the two AND gates 13 and 18 and the OR gate 15.

In the case of the embodiment variant in accordance with FIG. 4, there is connected upstream of the bistable multivibrator 4 a further bistable multivibrator 33, whose (second) input E4' is connected, together with the input E4 of the bistable multivibrator 4, to the acknowledgement pushbutton switch 22. On the output side, the further bistable multivibrator 33, whose first input E3' is connected to the output of the OR gate 14, is connected to a further AND gate 34. The output signal E of the further bistable multivibrator 33 is additionally passed via a further monostable multivibrator in the form once again of a one-shot 35 having a delay time or pulse duration T4, whose inverted output signal is likewise fed to the AND gate 34. On the output side, the AND gate 34 is connected to the first input E3 of the bistable multivibrator 4.

By means of this circuit augmentation with the bistable multivibrator 33, the one-shot 35 and the AND gate 34, over- or undervoltage signals $S_{UE}$ or $S_U$ are suppressed during the delay time or pulse duration T4. The bistable multivibrator 4 is driven, and hence a release pulse $P_A$ is generated, only in the event of an under- or overvoltage which is present during the comparatively long pulse duration T4.

**Claims**

1. An under- and/or overvoltage release (1) having a release device (4), which outputs a release pulse ($P_A$) for actuating a switching contact (7) in the event of a voltage ($U_{IN}$, U1) to be monitored and having a given power supply frequency ($f_N$) deviating from a voltage threshold value (U2), **characterized by**

   - a comparator circuit (2), which generates a state signal (A) having a first pulse duration (TA) from a comparison of the voltage ($U_{IN}$, U1) to be monitored with the voltage threshold value (U2), and
   - a combination circuit (3), which combines the state signal (A) and a comparison signal (B) having a second pulse duration (T1) logically with one another and, in the event of the first pulse duration (TA) deviating from the second pulse duration (T1), generates an undervoltage pulse ($S_U$) or an overvoltage pulse ($S_{UE}$) for generating the release pulse ($P_A$).

2. The under- and/or overvoltage release as claimed in claim 1, **characterized in that** the voltage ($U_{IN}$) to be monitored is fed to a first input (E1) of the comparator circuit (2) via a rectifier circuit (9a) as input voltage (U1).

3. The under- and/or overvoltage release as claimed in claim 1 or 2, **characterized in that** the voltage threshold value is a variable comparison voltage (U2) fed to the comparator circuit (2).

4. The under- and/or overvoltage release as claimed in claim 3, **characterized in that** the comparison voltage (U2) is fed to a second input (E2) of the comparator circuit (2) via a bus coupler (24).

5. The under- and/or overvoltage release as claimed in one of claims 1 to 4, **characterized in that** the (second) pulse duration (T1) of the comparison signal (B) corresponds to 0.25 times the power supply frequency ($f_N$).

6. The under- and/or overvoltage release as claimed in one of claims 1 to 3, **characterized by** a bistable multivibrator (4), which is connected downstream of the combination circuit (3) and, on the output side, is connected to the release device (5).

7. The under- and/or overvoltage release as claimed in one of claims 1 to 6, **characterized in that** the combination circuit (3) is assigned a first monostable multivibrator (11) having a delay time corresponding to the second pulse duration (T1).

8. The under- and/or overvoltage release as claimed in one of claims 1 to 7, **characterized in that** the second pulse duration (T1) is adjustable.

9. The under- and/or overvoltage release as claimed in claim 7 or 8, **characterized in that** the first monostable multivibrator (11) is connected, on the input side, to the output of the comparator circuit (2) and, on the output side, to a first input of at least one AND gate (12, 13), to whose second input the output of the comparator circuit (2) is connected.

10. The under- and/or overvoltage release as claimed in one of claims 1 to 9, **characterized in that** the combination circuit (3) is assigned a second monostable multivibrator (16) having a third pulse duration (T2) corresponding at least to half the power supply frequency ($f_N$).

11. The under- and/or overvoltage release as claimed in claim 10, **characterized in that** the third pulse duration (T1) is adjustable.

12. The under- and/or overvoltage release as claimed in claim 10 or 11, **characterized in that** the second monostable multivibrator (16) is connected, on the input side, to the output of the comparator circuit (2) and, on the output side, to a first input of at least one AND gate (17, 18), to whose second input the output of the comparator circuit (2) is connected.

13. The under- and/or overvoltage release as claimed in claim 12, **characterized in that** the AND gate (12, 13), which, on the input side, is connected to the first monostable multivibrator (11), is connected on the output side to a first input of an OR gate (14, 15), to whose second input is connected the output of the AND gate (17, 18), which, on the input side, is connected to the second monostable multivibrator (16).

14. The under- and/or overvoltage release as claimed in one of claims 1 to 13 as an attachment module for a low-voltage switching device, in particular for an electrical protective circuit-breaker (8).

**Patentansprüche**

1. Unter- und/oder Überspannungsauslöser (1) mit einer Auslöseeinrichtung (4), die bei Abweichung einer zu überwachenden Spannung ($U_{IN}$,U1) mit gegebener Netzfrequenz ($f_N$) von einem Spannungsschwellwert (U2) einen Auslöseimpuls ($P_A$) zur Betätigung eines Schaltkontaktes (7) ausgibt, **gekennzeichnet durch**

   - eine Komparatorschaltung (2), die aus einem Vergleich der zu überwachenden Spannung ($U_{IN}$, U1) mit dem Spannungsschwellwert (U2) ein Zustandssignal (A) mit einer ersten Impulsdauer (TA) erzeugt, und
   - eine Verknüpfungsschaltung (3), die das Zustandssignals (A) und ein Vergleichssignal (B) mit einer zweiten Impulsdauer (T1) logisch miteinander verknüpft sowie bei Abweichung der ersten Impulsdauer (TA) von der zweiten Impulsdauer (T1) einen Unterspannungsimpuls

($S_U$) bzw. einen Überspannungsimpuls ($S_{UE}$) zur Generierung des Auslöseimpulses ($P_A$) erzeugt.

2. Unter- und/oder Überspannungsauslöser nach Anspruch 1, **dadurch gekennzeichnet, dass** die zu überwachende Spannung ($U_{IN}$) einem ersten Eingang (E1) der Komparatorschaltung (2) über eine Gleichrichterschaltung (9a) als Eingangsspannung (U1) zugeführt ist.

3. Unter- und/oder Überspannungsauslöser nach Anspruch 1 oder 2 , **dadurch gekennzeichnet, dass** der Spannungsschwellwert eine der Komparatorschaltung (2) zugeführte veränderbare Vergleichsspannung (U2) ist.

4. Unter- und/oder Überspannungsauslöser nach Anspruch 3, **dadurch gekennzeichnet, dass** einem zweiten Eingang (E2) der Komparatorschaltung (2) die Vergleichsspannung (U2) über einen Buskoppler (24) zugeführt ist.

5. Unter- und/oder Überspannungsauslöser nach einem der Ansprüche 1 bis 4 , **dadurch gekennzeichnet, dass** die (zweite) Impulsdauer (T1) des Vergleichssignals (B) dem 0,25-fachen der Netzfrequenz ($f_N$) entspricht.

6. Unter- und/oder Überspannungsauslöser nach einem der Ansprüche 1 bis 3 , **gekennzeichnet durch** eine der Verknüpfungsschaltung (3) nachgeschaltete bistabile Kippstufe (4), die ausgangsseitig mit der Auslöseeinrichtung (5) verbunden ist.

7. Unter- und/oder Überspannungsauslöser nach einem der Ansprüche 1 bis 6, **dadurch gekennzeichnet, dass** der Verknüpfungsschaltung (3) ein erstes monostabiles Kippglied (11) mit einer der zweiten Impulsdauer (T1) entsprechenden Verzögerungszeit zugeordnet ist.

8. Unter- und/oder Überspannungsauslöser nach einem der Ansprüche 1 bis 7, **dadurch gekennzeichnet, dass** die zweite Impulsdauer (T1) einstellbar ist.

9. Unter- und/oder Überspannungsauslöser nach Anspruch 7 oder 8, **dadurch gekennzeichnet, dass** das erste monostabile Kippglied (11) eingangsseitig an den Ausgang der Komparatorschaltung (2) und ausgangsseitig an einen ersten Eingang mindestens eines UND-Gliedes (12,13) geführt ist, an dessen zweiten Eingang der Ausgang der Komparatorschaltung (2) geführt ist.

10. Unter- und/oder Überspannungsauslöser nach einem der Ansprüche 1 bis 9 , **dadurch gekenn-**

**zeichnet, dass** der Verknüpfungsschaltung (3) ein zweites monostabiles Kippglied (16) mit einer mindestens der halben Netzfrequenz ($f_N$) entsprechenden dritten Impulsdauer (T2) zugeordnet ist.

11. Unter- und/oder Überspannungsauslöser nach Anspruch 10, **dadurch gekennzeichnet, dass** die dritte Impulsdauer (T1) einstellbar ist.

12. Unter- und/oder Überspannungsauslöser nach Anspruch 10 oder 11, **dadurch gekennzeichnet, dass** das zweite monostabile Kippglied (16) eingangsseitig an den Ausgang der Komparatorschaltung (2) und ausgangsseitig an einen ersten Eingang mindestens eines UND-Gliedes (17,18) geführt ist, an dessen zweiten Eingang der Ausgang der Komparatorschaltung (2) geführt ist.

13. Unter- und/oder Überspannungsauslöser nach Anspruch 12, **dadurch gekennzeichnet, dass** das eingangsseitig mit dem ersten monostabilen Kippglied (11) verbundene UND-Glied (12,13) ausgangsseitig an einen ersten Eingang eines ODER-Gliedes (14,15) geführt ist, an dessen zweiten Eingang der Ausgang des eingangsseitig mit dem zweiten monostabilen Kippglied (16) verbundenen UND-Gliedes (17,18) geführt ist

14. Unter- und/oder Überspannungsauslöser nach einem der Ansprüche 1 bis 13 als Anbaumodul für ein Niederspannungsschaltgerät, insbesondere für einen elektrischen Schutzschalter (8).

**Revendications**

1. Un déclencheur (1) à minimum et/ou à maximum de tension ayant un dispositif (4) de déclenchement qui fournit en sortie une impulsion ($P_A$) de déclenchement pour actionner un contact (7) d'interruption dans le cas d'une tension ($U_{IN}$, U1) à contrôler et ayant une fréquence ($f_N$) d'alimentation donnée s'écartant d'une valeur (U2) de seuil de tension,

      **caractérisé par**

- un circuit (2) comparateur qui engendre un signal (A) d'état ayant une première durée (TA) d'impulsion à partir d'une comparaison de la tension ($U_{IN}$, U1) à contrôler à la valeur (U2) de seuil de tension, et
- un circuit (3) de combinaison, qui combine le signal (A) d'état et un signal (B) de comparaison ayant une deuxième durée (T1) d'impulsion, logiquement l'un avec l'autre, et, dans le cas où la première durée (TA) d'impulsion s'écarte de la deuxième durée (T1) d'impulsion, engendre une impulsion ($S_U$) à minimum de tension ou une impulsion ($S_{UE}$) à maximum de tension pour engendrer l'impulsion ($P_A$) de déclenchement.

2. Le déclencheur à minimum et/ou à maximum de tension, tel que revendiqué à la revendication 1, **caractérisé en ce que** la tension ($U_{IN}$) à contrôler est appliquée à une première entrée (E1) du circuit (2) comparateur par l'intermédiaire d'un circuit (9a) redresseur en tant que tension (U1) d'entrée.

3. Le déclencheur à minimum et/ou à maximum de tension suivant la revendication 1 ou 2, **caractérisé en ce que** la valeur de seuil de tension est une tension U2 variable de comparaison envoyée au circuit (2) comparateur.

4. Le déclencheur à minimum et/ou à maximum de tension suivant la revendication 3, **caractérisé en ce que** la tension (U2) de comparaison est envoyée à une deuxième entrée (E2) du circuit (2) comparateur par l'intermédiaire d'un coupleur (24) de bus.

5. Le déclencheur à minimum et/ou à maximum de tension suivant l'une des revendications 1 à 4, **caractérisé en ce que** la (deuxième durée) (T1) d'impulsion du signal (B) de comparaison correspond à 0,25 fois la fréquence ($f_N$) d'alimentation en courant.

6. Le déclencheur à minimum et/ou à maximum de tension suivant l'une des revendications 1 à 3, **caractérisé par** un multivibrateur (4) bistable qui est connecté en aval du circuit (3) de combinaison et, du côté de la sortie, est connecté au dispositif (5) de déclenchement.

7. Le déclencheur à minimum et/ou à maximum de tension suivant l'une des revendications 1 à 6, **caractérisé en ce qu'**il est affecté au circuit (3) de combinaison un premier multivibrateur (11) monostable ayant un temps de retard correspondant à la deuxième durée (T1) d'impulsion.

8. Le déclencheur à minimum et/ou à maximum de tension suivant l'une des revendications 1 à 7, **caractérisé en ce que** la deuxième durée (T1) d'impulsion est réglable.

9. Le déclencheur à minimum et/ou à maximum de tension suivant la revendication 7 ou 8, **caractérisé en ce que** le premier multivibrateur (11) monostable est connecté, du côté de l'entrée, à la sortie du circuit (2) comparateur et, du côté de la sortie, à une première entrée d'au moins une porte (12, 13) ET à la seconde entrée de laquelle est connectée la sortie du circuit (2) comparateur.

10. Le déclencheur à minimum et/ou à maximum de tension suivant l'une des revendications 1 à 9, **ca-**

**ractérisé en ce qu'**il est affecté au circuit (3) de combinaison un deuxième multivibrateur (16) monostable ayant une troisième durée (T2) d'impulsion correspondant au moins à la moitié de la fréquence ($f_N$) d'alimentation en courant.

11. Le déclencheur à minimum et/ou à maximum de tension suivant la revendication 10, **caractérisé en ce que** la troisième durée (T1) d'impulsion est réglable.

12. Le déclencheur à minimum et/ou à maximum de tension suivant la revendication 10 ou 11, **caractérisé en ce que** le deuxième multivibrateur (16) monostable est connecté, du côté de l'entrée, à la sortie du circuit (2) comparateur et, du côté de la sortie, à une première entrée d'au moins une porte (17, 18) ET à la seconde entrée de laquelle est connectée la sortie du circuit (2) comparateur.

13. Le déclencheur à minimum et/ou à maximum de tension suivant la revendication 12, **caractérisé en ce que** la porte (12, 13) ET ,qui, du côté de l'entrée, est connectée au premier multivibrateur (11) monostable, est connectée, du côté de la sortie, à une première entrée d'une porte (14, 15) OU à la seconde entrée de laquelle est connectée la sortie de la porte (17, 18) ET qui, du côté de l'entrée, est connectée au deuxième multivibrateur (16) monostable.

14. Le déclencheur à minimum et/ou à maximum de tension suivant l'une des revendications 1 à 13, sous la forme d'un module adaptable pour un dispositif de coupure à basse tension, en particulier pour un disjoncteur (8) électrique de protection.

Fig. 1

EP 1 281 226 B1

Fig. 2

Fig. 3

EP 1 281 226 B1

Fig. 4